# EUROPEAN PATENT SPECIFICATION

(11) **EP 3 745 512 B1**
(45) Date of publication and mention of the grant of the patent: **01.06.2022**
(21) Application number: 19885874.8
(22) Date of filing: 13.11.2019
(51) Int. Cl.: H01M 4/64, H01M 4/02, H01G 11/28, H01G 11/70, H01M 4/66, H01M 10/42, H01M 4/131, H01M 10/0525

(54) **POSITIVE ELECTRODE PLATE AND ELECTROCHEMICAL DEVICE**
POSITIVELEKTRODENPLATTE UND ELEKTROCHEMISCHE VORRICHTUNG
PLAQUE D'ÉLECTRODE POSITIVE ET DISPOSITIF ÉLECTROCHIMIQUE

(30) Priority: 16.11.2018 CN 201811367038
(43) Date of publication of application: 02.12.2020
(73) Proprietor: Contemporary Amperex Technology Co., Limited, Ningde City, Fujian 352100 (CN)
(72) Inventor: JIN, Haizu, Ningde, Fujian 352100 (CN); LI, Zhenhua, Ningde, Fujian 352100 (CN); LI, Xing, Ningde, Fujian 352100 (CN)
(74) Representative: Vossius & Partner Patentanwälte Rechtsanwälte mbB
(86) International application number: PCT/CN2019/117852
(87) International publication number: WO 2020/098671

(56) References cited:
- EP-A1- 3 147 971
- EP-A1- 3 483 900
- EP-A1- 3 483 954
- CN-A- 102 171 861
- CN-A- 102 575 322
- CN-A- 102 683 739
- CN-A- 107 437 622
- CN-A- 108 511 761

## Description

### TECHNICAL FIELD

The present application relates to the field of electrochemical technology, and more particularly, to a positive electrode plate and an electrochemical device containing the positive electrode plate.

### BACKGROUND

Lithium-ion batteries are widely used in electric vehicles and consumer electronics because of their high energy density, high output power, long cycle life and small environmental pollution. However, lithium-ion batteries are prone to fire and explosion when subjected to abnormal conditions such as crushing, bumping or puncture, thereby causing serious harm. Therefore, the safety problem of lithium-ion batteries greatly limits the application and popularity of lithium-ion batteries.

A large number of experimental results show that internal short circuit of lithium-ion battery is the basic cause of the battery's safety hazard. In order to avoid the internal short-circuit of the battery, researchers have tried to improve battery performances in many ways, including the use of Positive Temperature Coefficient (Positive Temperature Coefficient, PTC) materials to improve the safety performance of lithium-ion battery. A PTC (Positive Temperature Coefficient, PTC) material is a positive temperature coefficient heat sensitive material, which has the characteristic that its resistivity increases with increasing temperature. When the temperature exceeds a certain temperature, its resistivity increases rapidly stepwise.

In the study of utilizing the characteristics of PTC materials to improve the safety performance of lithium ion battery, some studies involve addition of PTC materials to the electrode active material layer of the battery. When the temperature of the battery rises, the resistance of the PTC material increases, thereby causing the resistance of the entire electrode active material layer to become large, and even making the conductive path of the entire electrode active material layer to be destroyed. Thus the security effect is achieved by causing power interruption and preventing the electrochemical reaction from proceeding. However, with this modification, the PTC material added in the electrode active material layer adversely affects the electrochemical performance of the battery.

Still other studies have provided a separate layer of PTC material (safety coating) between the metal current collector and the electrode active material layer of the battery. When the temperature of the battery rises, the resistance of the PTC material layer increases, so that the electric resistance between the metal current collector and the electrode active material layer is increased or even circuit is interrupted, thereby preventing the electrochemical reaction from proceeding and achieving the security effect. However, with this modification, when the active material slurry is coated on the surface of the PTC material layer, the solvent such as N-methyl-2-pyrrolidone (N-methyl-2-pyrrolidone, NMP) in the slurry would dissolve the PTC material of the PTC layer and thus the dissolved PTC material enters the upper active material layer, which not only destroys the PCT effect of the PTC layer and also deteriorates electrical properties of electrode plates. In addition, in the compacting step of the plate fabrication process, the PTC material layer is easily squeezed to the edge and thus the electrode active material layer would directly contact the metal current collector, so that the PTC material layer cannot improve the safety performance. In addition, it is required to greatly improve the performance of the PTC material layer, such as the response speed, the effect of blocking current, and the like.

In view of this, it is indeed necessary to provide an electrode plate and a battery having improved safety performances and battery performances such as a cycle performance, which are capable of solving the above problems.

EP 3 147 971 A1 relates to a positive electrode and a Li-ion battery including the positive electrode. EP 3 483 900 A1 and EP 3 483 954 A1 relate to electrode plates, electrochemical devices and a safety coatings.

### SUMMARY

An object of the present application is to provide an electrode plate and an electrochemical device with improved safety and electrical performances such as cycle performance.

A further object of the present application is to provide an electrode plate and an electrochemical device with good safety performance, especially during nail penetration. The invention is specified by the independent claim. Preferred embodiments are defined in the dependent claims. The present application provides a positive electrode plate comprising a metal current collector, a positive active material layer and a safety coating disposed between the metal current collector and the positive active material layer, wherein the safety coating comprises a polymer matrix, a conductive material and an inorganic filler and wherein the polymer matrix is a fluorinated polyolefin and/or chlorinated polyolefin polymer matrix, based on the total weight of the safety coating, the polymer matrix is present in a weight percentage of 35-75% by weight, the conductive material is present in a weight percentage of 5-25% by weight and the inorganic filler is present in a weight percentage of 10-60% by weight and the metal current collector has an elongation at break δ fulfilling 0.8% ≤ δ ≤2%, wherein the polymer matrix of the safety coating is fluorinated polyolefin and/or chlorinated polyolefin having a crosslinked structure.

The present application also provides an electrochemical device comprising the positive electrode plate of the present application, which is preferably a capacitor, a primary battery or a secondary battery.

### DESCRIPTION OF THE DRAWINGS

The positive electrode plate, the electrochemical device and the beneficial effects of the present application will be described in detail below with reference to the accompanying drawings and specific embodiments.
Fig. 1 is a schematic structural view of a positive electrode plate according to an embodiment of the present application , in which 10 - a metal current collector; 14 - a positive active material layer; 12 - a safety coating (i.e., PTC safety coating).
Fig. 2 is a perspective view of a lithium ion battery according to an embodiment of the present application.
Fig. 3 is an exploded view of Fig. 2.
Fig. 4 is a perspective view of a battery module according to an embodiment of the present application.
Fig. 5 is a perspective view of a battery pack according to an embodiment of the present application.
Fig. 6 is an exploded view of Fig. 5.
Fig. 7 is a schematic view showing a device with a lithium ion battery as a power source according to an embodiment of the present application in which the reference numerals are defined as follows: 1- battery pack; 2- upper cabinet body; 3-lower cabinet body; 4-battery module; 5-battery; 51-case; 52-electrode assembly and 53-top cover assembly.

### DETAILED DESCRIPTION

The present application discloses a positive electrode plate comprising a metal current collector, a positive active material layer and a safety coating disposed between the current collector and the positive active material layer, wherein the safety coating comprises a polymer matrix, a conductive material and an inorganic filler, and the polymer matrix is fluorinated polyolefin and/or chlorinated polyolefin polymer matrix, based on the total weight of the safety coating, the polymer matrix is present in a weight percentage of 35-75% by weight, the conductive material is present in a weight percentage of 5-25% by weight and the inorganic filler is present in a weight percentage of 10-60% by weight and the metal current collector has an elongation at break δ fulfilling 0.8%≤ δ ≤ 2% .

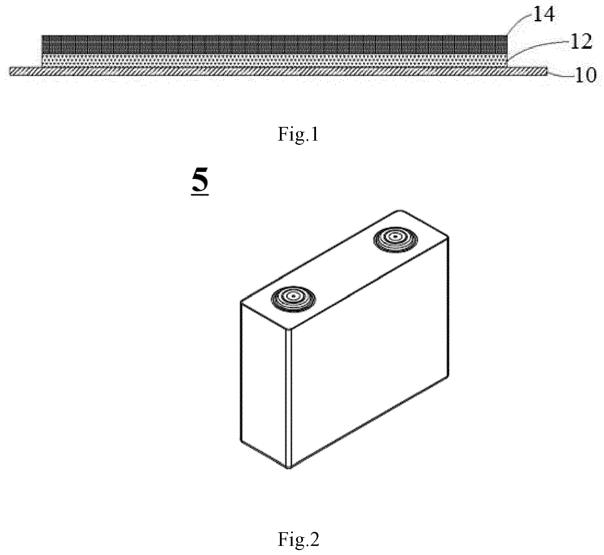

Fig. 1 is a schematic structural view of a positive electrode plate according to some embodiments of the present application , in which 10 - a current collector; 14 - a positive active material layer; 12 - a safety coating (i.e., PTC safety coating).

It would be easy to understand that although the PTC safety coating 12 and the positive active material layer 14 are provided only on one side of the positive current collector 10 as shown in Fig. 1, in other embodiments, the PTC safety coating 12 and the positive active material layer 14 may be provided on both side of the positive current collector 10.

In order to overcome defects of traditional PTC safety coatings, the present application proposes a number of technical improvements, and adopts a variety of technical means to work together to improve performance and stability of PTC safety coatings.

### First, it was discovered by the inventors that stability and performance of the safety coatings can be improved by selecting a polymer matrix material in the safety coatings.

In the conventional coating having PTC effect for use in batteries, fluorinated polyolefin or chlorinated polyolefin such as polyvinylidene fluoride (polyvinylidene fluoride, PVDF) is used as a binder. When used as a binder, the amount of PVDF is much less than the amount of the matrix material. For example, the PVDF binder in conventional PTC coatings is typically present in an amount of less than 15% or 10%, or even less, relative to the total weight of the coating. Some publications such as CN105594019A, CN106558676A also mention that PVDF itself may be used as a PTC matrix material, but most of them are purely speculative and have not actually verified the use of PVDF as a PTC matrix material. On the contrary, some other publications such as CN104823313A on paragraph [0071] explicitly recited that PVDF is not suitable for use as a PTC matrix material.

However, the inventors have found that fluorinated polyolefin and/or chlorinated polyolefin can function as a polymer matrix material for a PTC thermistor layer. Based on to the total weight of the safety coating, the weight percentage of the fluorinated polyolefin and/or chlorinated polyolefin as the polymer matrix material is usually 35 wt% to 75 wt%, which is much higher than the amount of fluorinated polyolefin or chlorinated polyolefin such as PVDF usually used as a binder in the prior PTC thermistor layer.

In the present application, the fluorinated polyolefin and/or chlorinated polyolefin material actually functions, both as a PTC matrix and as a binder, which avoids the influence on the adhesion of the coating, the response speed, and the response temperature of the PTC effect due to the difference between materials for the binder and the PTC matrix material.

Secondly, the safety coating composed of fluorinated polyolefin and/or chlorinated polyolefin and a conductive material can function as a PTC thermistor layer and its operating temperature range is suitably from 80 °C to 160 °C. Thus the high temperature safety performance of the battery may be improved well.

Furthermore, fluorinated polyolefin and/or chlorinated polyolefin as the polymer matrix material of the safety coating serves as both a PTC matrix and a binder, thereby facilitating the preparation of a thinner safety coating without affecting the adhesion of the safety coating.

In addition, the solvent such as NMP or the like or the electrolyte in the positive active material layer over the safety coating may have an adverse effect such as dissolution, swelling and the like on the polymer material of the safety coating. For the safety coating containing PVDF in a binder amount, the adhesion would be easy to be worse. In the safety coating of the present application, the above adverse effect is relatively low since the content of fluorinated polyolefin and/or chlorinated polyolefin is higher.

In the positive electrode plate of the present application, based on to the total weight of the safety coating, the weight percentage of fluorinated polyolefin and/or chlorinated polyolefin as the polymer matrix material is usually 35 wt% to 75 wt%. If the content is too small, the polymer matrix cannot ensure the safety coating works well in terms of its PTC effect; and if the content is too high, the content of the conductive material and the inorganic filler will be too low and thus will affect the response speed of the safety coating. The weight percentage of the fluorinated polyolefin and/or chlorinated polyolefin polymer matrix is preferably from 40 wt% to 75 wt%, more preferably from 50 wt% to 75 wt%.

In the present application, fluorinated polyolefin and/or chlorinated polyolefin as the polymer matrix of the safety coating refers to polyvinylidene fluoride (PVDF), polyvinylidene chloride (polyvinylidene chloride, PVDC), modified PVDF, or modified PVDC. For example, fluorinated polyolefin and/or chlorinated polyolefin may be selected from the group consisting of PVDF, carboxylic acid modified PVDF, acrylic acid modified PVDF, PVDF copolymer, PVDC, carboxylic acid modified PVDC, acrylic acid modified PVDC, PVDC copolymer or any mixture thereof.

### Secondly, it was discovered by the inventors that addition of an inorganic filler to the safety coating of positive electrode plate can stabilize the safety coating.

It has been found that in the case that the safety coating does not contain an inorganic filler, the solvent such as NMP or the like in the positive active material layer or the electrolyte over the safety coating may adversely dissolve and swell the polymer material in the safety coating, thereby damaging the safety coating and affecting its PTC effect. After adding an inorganic filler to the safety coating, the inorganic filler as a barrier can advantageously eliminate the above-mentioned adverse effects such as dissolution and swelling, and thus it is advantageous for stabilizing the safety coating. In addition, it has also been found that the addition of the inorganic filler is also advantageous for ensuring that the safety coating is not easily deformed during compaction of the electrode plate. Therefore, the addition of the inorganic filler can well ensure that the safety coating is stably disposed between the metal current collector and the positive active material layer and that the metal current collector is prevented from directly contacting the positive active material layer, thereby improving safety performance of the battery.

The inventors have also unexpectedly discovered that inorganic fillers can also improve the performance such as the response speed of the safety coating. The safety coating works as below. At normal temperature, the safety coating relies on a good conductive network formed between the conductive materials to conduct electron conduction. When the temperature rises, the volume of the polymer matrix materials begins to expand, the spacing between the particles of the conductive materials increases, and thus the conductive network is partially blocked, so that the resistance of the safety coating increases gradually. When a certain temperature for example the operating temperature is reached, the conductive network is almost completely blocked, and the current approaches zero. However, usually the conductive network is partially recovered, when the inside of the safety coating reaches a dynamic balance. Therefore, after reaching a certain temperature for example, the operating temperature, the resistance of the safety coating is not as large as expected, and still there is very little current flowing through. The inventors have found that after the inorganic filler is added and the volume of the polymer matrix materials expands, the inorganic filler and the expanded polymer matrix material can function to block the conductive network. Therefore, after the addition of the inorganic filler, the safety coating can better produce PTC effect in the operating temperature range. That is to say, the increasing speed of resistance is faster and the PTC response speed is faster at a high temperature. Thus, the safety performance of battery can be improved better.

The inorganic filler is present in a weight percentage of 10 wt% to 60 wt% based on the total weight of the safety coating. If the content of the inorganic filler is too small, it will not be enough to stabilize the safety coating; if the content is too large, it will affect the PTC performance of the safety coating. The weight percentage of the inorganic filler is preferably from 15 wt% to 45 wt%.

The inorganic filler is selected from at least one of a metal oxide, a non-metal oxide, a metal carbide, a non-metal carbide, and an inorganic salt, or at least one of a conductive carbon coating modified above material, a conductive metal coating modified above material or a conductive polymer coating modified above material.

For example, the inorganic filler may be selected from at least one of magnesium oxide, aluminum oxide, titanium dioxide, zirconium oxide, silicon dioxide, silicon carbide, boron carbide, calcium carbonate, aluminum silicate, calcium silicate, potassium titanate, barium sulfate, lithium cobalt oxide, lithium manganese oxide, lithium nickel oxide, lithium nickel manganese oxide, lithium nickel manganese cobalt oxide, lithium nickel manganese alumina, lithium iron phosphate, lithium vanadium phosphate, lithium cobalt phosphate, lithium manganese phosphate, lithium iron silicate, lithium vanadium silicate, lithium cobalt silicate, lithium manganese silicate, and lithium titanate, or at least one of a conductive carbon coating modified above material, a conductive metal coating modified above material or a conductive polymer coating modified above material.

Especially, the inventors have found that it is particularly advantageous when a positive electrochemically active material or a conductive carbon coating modified above material, a conductive metal coating modified above material or a conductive polymer coating modified above material is used as an inorganic filler in the case that the safety coating is used for a positive electrode plate. In such a case, in addition to above mentioned function as stabilizing the binding layer, i.e. hindering organic solvent from dissolving or swelling the polymer material of the binding layer and ensuring that the binding layer is not easily deformed, and as improving the performance such as the response speed and the like of the safety coating, the inorganic filler may further play the following two roles:
(1) to improve the overcharge performance of the battery. In the PTC safety coating system composed of a fluorinated polyolefin and/or chlorinated polyolefin polymer matrix and a conductive material, since the electrochemically active material has the characteristics of lithium ion intercalation, the electrochemically active material can be used as an "active site" in the conductive network at the normal operating temperature of the battery and thus the number of "active site" in the safety coating is increased. In the process of overcharging, the electrochemically active material will delithiate, the de-lithiating process has become more and more difficult, and the impedance is increasing. Therefore, when the current passes, the heat-generating power increases, and the temperature of the primer layer increases faster, so the PTC effect responds faster, which in turn can generate PTC effects before the overcharge safety problem of battery occurs. Thus the battery overcharge safety performance may be improved.
(2) to contribute charge and discharge capacity. Since the electrochemically active material can contribute a certain charge and discharge capacity at the normal operating temperature of the battery, the effect of the safety coating on the electrochemical performance such as capacity of the battery at the normal operating temperature can be dropped to the lowest.

Therefore, for the positive electrode plate, it is the most preferred to use a positive electrochemically active material or a conductive carbon coating modified above material, a conductive metal coating modified above material or a conductive polymer coating modified above material as the inorganic filler of the safety coating.

The positive electrochemically active material is preferably selected from at least one of lithium cobalt oxide, lithium nickel manganese cobalt oxide, lithium nickel manganese alumina, lithium iron phosphate, lithium vanadium phosphate, lithium cobalt phosphate, lithium manganese phosphate, lithium iron silicate, lithium vanadium silicate, lithium cobalt silicate, lithium manganese silicate, spinel lithium manganese oxide, spinel lithium nickel manganese oxide, and lithium titanate, or a conductive carbon coating modified above material, a conductive metal coating modified above material, and a conductive polymer coating modified above material. Especially, the positive electrochemically active material is at least one of a conductive carbon coating modified above electrochemically active materials, such as conductive carbon coating modified lithium cobalt oxide, conductive carbon coating modified lithium nickel manganese cobalt oxide, conductive carbon coating modified lithium nickel manganese alumina, conductive carbon coating modified lithium iron phosphate, conductive carbon coating modified lithium vanadium phosphate, conductive carbon coating modified lithium cobalt phosphate, conductive carbon coating modified lithium manganese phosphate, conductive carbon coating modified lithium manganese iron phosphate, conductive carbon coating modified lithium iron silicate, conductive carbon coating modified lithium vanadium silicate, conductive carbon coating modified lithium cobalt silicate, conductive carbon coating modified lithium manganese silicate, conductive carbon coating modified spinel lithium manganese oxide, conductive carbon coating modified spinel lithium nickel manganese oxide, conductive carbon coating modified lithium titanate. These electrochemically active materials and conductive carbon coating modified electrochemically active materials are commonly used materials in the manufacture of lithium batteries, most of which are commercially available. The type of conductive carbon may be graphite, graphene, conductive carbon black, carbon nanotubes or the like. Further, the conductivity of the inorganic filler can be adjusted by adjusting the content of the conductive carbon coating.

When the particle size of the inorganic filler is too small, it will have increased specific surface area and thus side reaction will increase; when the particle size of the inorganic filler is too large, the application thickness of the safety coating is too large and the coating is not easy to be even. Preferably, the average particle diameter D of the inorganic filler in the safety coating fulfils the relationship of 100 nm ≤ D ≤ 10 µm, more preferably 1 µm ≤ D ≤ 6 µm. When the particle size of the inorganic filler is in the above range, it may also improve the effect of blocking the conductive network at high temperature, thereby improving the response speed of the safety coating. Further preferably, the inorganic filler in the safety coating has a specific surface area of Brunner Emmet-Teller (Brunner Emmet-Teller, BET) of not more than 500 m²/g. When the specific surface area of the inorganic filler increases, side reaction will increase and thus the battery performance will be affected. Moreover, in the case that the specific surface area of the inorganic filler is too large, a higher proportion of binder will be required to be consumed, which will cause the binding force among the safety coating, the current collector and the positive active material layer to be reduced and the growth rate of the internal resistance to be high. When the specific surface area (BET) of the inorganic filler is not more than 500 m²/g, a better overall effect can be provided.

In addition to the polymer matrix and the inorganic filler, the safety coating provided between the current collector and the positive active material layer also comprises a conductive material.

In the present application, the safety coating works as below. At a normal temperature, the safety coating relies on a good conductive network formed between the conductive materials to conduct electron conduction. When the temperature rises, the volume of the polymer matrix material begins to expand, the spacing between the particles of the conductive materials increases, and thus the conductive network is partially blocked, so that the resistance of the safety coating increases gradually. When a certain temperature for example an operating temperature is reached, the conductive network is almost completely blocked, and the current approaches zero, thereby protecting the electrochemical device with the safety coating. Therefore, the amount ratio of the conductive material and the polymer matrix material is important for the PTC layer to function properly.

In the present application, based on the total weight of the safety coating, the conductive material is present in a weight percentage of 5 wt% to 25 wt%, preferably of 5 wt% to 20 wt%. Preferably, the weight ratio of the polymer matrix material to the conductive material is 2 or more. With the above ratio, the safety performance during nail penetration can be further improved. If the weight ratio of the polymer matrix material to the conductive material is less than 2, the content of the conductive material is relatively high, and the conductive network may not be sufficiently broken at elevated temperature, thereby affecting the PTC effect. If the weight ratio of the polymer matrix material to the conductive material is too high, the content of the conductive material is relatively low, which causes a large increase in the direct current internal resistance (direct current internal resistance, DCR) of the battery at normal operation.

Preferably, the weight ratio of the polymer matrix to the conductive material is 8 or less. In a preferred embodiment of the present application, the weight ratio of the polymer matrix to the conductive material is 3 or more and 8 or less.

The conductive material may be selected from at least one of a conductive carbon-based material, a conductive metal material, and a conductive polymer material. As an example, the conductive carbon-based material may be selected from at least one of conductive carbon black, acetylene black, graphite, graphene, carbon nanotubes, carbon nanofibers; the conductive metal material may be selected from at least one of Aluminum (Aluminum, Al) powder, Nickel (Nickel, Ni) powder, and gold powder; and the conductive polymer material may be selected from at least one of conductive polythiophene, conductive polypyrrole, and conductive polyaniline. The conductive materials may be used alone or in combination of two or more.

Conductive materials are typically used in the form of powders or granules. The particle size may be 5 nm to 500 nm, for example, 10 nm to 300 nm, 15 nm to 200 nm, 15 nm to 100 nm, 20 nm to 400 nm, 20 nm to 150 nm, or the like, depending on the specific application environment.

In addition to the polymer matrix, the conductive material, and the inorganic filler, the safety coating may also contain other materials or components, such as other binders that promote adhesion between the coating and the substrate for the metal current collector. Those skilled in the art can select other auxiliaries according to actual needs. For example, in other embodiments of the present application, the safety coating may also comprise other binders. In still other embodiments of the present application, the safety coating may further include other polymer matrix other than the above mentioned polymer matrix. Since fluorinated polyolefin and/or chlorinated polyolefin polymer matrix material itself has a good adhesion, in order to simplify the process and to save the cost, in a preferred embodiment of the present application in which fluorinated polyolefin and/or chlorinated polyolefin is used as a polymer matrix material, the safety coating layer is substantially free of other binders or other polymer matrixes other than the matrix material in which the phrase "substantially free" means≤ 3%, ≤ 1%, or ≤ 0.5%.

Moreover, in some preferred embodiments of the present application in which fluorinated polyolefin and/or chlorinated polyolefin is used as a polymer matrix, the safety coating of the present application may consist essentially of the polymer matrix, the conductive material, and the inorganic filler, which is free of a significant amounts (e.g.,≤ 3%, ≤ 1%) , or ≤0.5%) of other components.

The thickness H of the safety coating may be reasonably determined according to actual demand. Preferably, it fulfils 1µm≤H≤20µm, more preferably 3µm≤H≤10µm.

### Thirdly, it was found by the inventors that the selected current collectors' performance may further improve the performance of the positive electrode, especially the safety performance during nail penetration.

The above safety coating is applied over the metal current collector and is disposed between the metal current collector and the positive active material layer to exert its function. It was found that the matching and adhesion between the safety coating and the current collector can affect the performance of the safety coating. It has been found that in the positive electrode plate, the safety coating not only increases its resistance when the temperature increases and plays PTC effect, it can also wrap metal burrs that may be generated in the current collector under abnormal conditions such as nail penetration, thereby preventing short circuit in the battery. It was found that if the elongation at break of the current collector is too large, the metal burrs will be larger, which is not conducive to improving safety performance of the battery. If the elongation at break of the current collector is too small, breakage is likely to occur during processing such as plate compaction or when the battery is squeezed or collided, thereby degrading quality or safety performance of the battery. Therefore, in order to further improve safety performance, especially during nail penetration, the elongation at break δ of the current collector should be no more than 2. 2% and not less than 0.8%.

The elongation at break of the metal current collector can be adjusted by changing purity, impurity content and additives of the metal current collector, the billet production process, the rolling speed, the heat treatment process, and the like.

It is preferred that the metal current collector has a thickness in the range of 4µm to 16µm.

For the current collector, the common materials in the art, preferably metal current collectors, such as metal flakes or metal foils of stainless steel, aluminum, copper, titanium or the like can be used. Preferably, the current collector is an aluminum-containing porous current collector (for example, a porous aluminum foil). Use of the porous aluminum foil can reduce the probability of occurrence of the metal burrs and further reduce the probability of occurrence of a severe aluminothermic reaction in an abnormal situation such as nailing. Therefore, safety performance of the battery may be further improved. In addition, Use of porous aluminum foil can also improve infiltration of the electrolyte to the electrode plate, and thereby improve the dynamic performance of the lithium ion battery. The safety coating can cover the surface of the porous aluminum foil to prevent leakage of the active material layer during the coating process.

In the present application, the safety coating and the positive active material layer are collectively referred as a film layer. For the conventional positive active material layer, its elongation usually is no more than 1%.

In the present application, the introduction of a safety coating results in a greatly improved elongation of the film layer. Therefore, in the abnormal situation such as nail penetration, the film layer with larger elongation can wrap metal burrs that may be generated in the current collector to prevent the occurrence of short circuit in the battery, thereby greatly improving the safety performance of the battery during nail penetration.

Preferably, the film layer has an elongation of 30% or more, preferably 80% or more. Preferably, the film layer has a single side thickness in the range of 30µm to 80µm.

Further, the film layer and the current collector of the electrode plate has a binding force of preferably 10 N/m or more. Larger binding force can improve the safety performance of the battery during nailing penetration. For example, the binding force between the safety coating and the current collector can be increased by introducing an additional binder or by carrying out crosslinking treatment to the polymer matrix, for example to increase the binding force between the film layer and the current collector.

Therefore, performance especially safety performance during nail penetration and stability of the safety coatings may be greatly improved by selecting fluorinated polyolefin and/or chlorinated polyolefin as the matrix material for the PTC safety coating, adding an inorganic filler especially a positive active material to the safety coating, and controlling the elongation at break of the metal current collector.

In addition, it was found that performance of the safety coatings can be further improved through optimization.

As a further improvement of another aspect of the present invention, the polymer matrix in the safety coating of the positive electrode plate is preferably subjected to crosslinking treatment. That is to say, it is fluorinated polyolefin and/or chlorinated polyolefin having a crosslinked structure.

The crosslinking treatment may be more advantageous for hindering the adverse effects of a solvent such as NMP or the like in the positive active material layer or an electrolyte on the polymer material in the safety coating, such as dissolving or swelling and the like, and for preventing the positive active material layer from cracking due to uneven stress.

In addition, the polymer matrix which is not subjected to crosslinking treatment has a large swelling in the electrolyte, so introduction of the safety coating causes a large DCR growth of battery, which is disadvantageous to improvement of the dynamic performance of battery. After being subjected to crosslinking treatment, the polymer matrix has an effectively suppressed swelling ratio, so that the DCR growth due to introduction of the safety coating can be remarkably reduced.

The procedure of the crosslinking treatment is known in the art. For example, for fluorinated polyolefin and/or chlorinated polyolefin polymer matrix, the crosslinking treatment can be achieved by introducing an activator and a crosslinking agent. The function of the activator is to remove HF or HCl from fluorinated polyolefin and/or chlorinated polyolefin to form a C=C double bond; and the crosslinking agent acts to crosslink the C=C double bond. As an activator, a strong base-weak acid salt such as sodium silicate or potassium silicate can be used. The weight ratio of the activator to the polymer matrix is usually from 0.5% to 5%. The crosslinking agent may be selected from at least one of polyisocyanates (JQ-1, JQ-1E, JQ-2E, JQ-3E, JQ-4, JQ-5, JQ-6, PAPI, emulsifiable MDI, tetraisocyanate), polyamines (propylenediamine, 3,3, -dichloro-4,4,-diaminodiphenylmethane also called as MOCA), polyols (polyethylene glycol, polypropylene glycol, trimethylolpropane), glycidyl ethers (polypropylene glycol glycidyl ether), inorganic substances (zinc oxide, aluminum chloride, aluminum sulfate, sulfur, boric acid, borax, chromium nitrate), glyoxal, aziridine, ethylenically unsaturated compounds (styrene, α-methylstyrene, acrylonitrile, acrylic acid, methacrylic acid, acrylates (1,4-butylene glycol diacrylate, ethylene glycol dimethacrylate, triallyl cyanurate (triallyl cyanurate, TAC), butyl acrylate, hydroxylethyl acrylate (hydroxylethyl acrylate, HEA), hydroxylpropyl acrylate (hydroxylpropyl acrylate, HPA), hydroxylethyl methacrylate (hydroxylethyl methacrylate, HEMA), hydroxylpropyl methacrylate (hydroxylpropyl methacrylate, HPMA), methyl methacrylate (methyl methacrylate, MMA), organosilicons (ethylorthosilicate, methyl orthosilicate, trimethoxysilane), benzenesulfonic acids (p-toluenesulfonic acid, p-toluenesulfonyl chloride), organic peroxides (dicumyl peroxide, bis(2,4-dichlorobenzoyl) peroxide), and metal organic compounds (aluminum isopropoxide, zinc acetate, titanium acetylacetonate).

The weight ratio of the crosslinking agent to the polymer matrix is from 0.01% to 5%. If the content of crosslinking agent is small, the crosslinking degree of the polymer matrix is low, which cannot eliminate cracking completely. If the content of crosslinking agent is too high, it is easy to cause gel during stirring.

The activator and the crosslinking agent may be added after the stirring step of the slurry for preparing the safety coating is completed. After carrying out the crosslinking reaction, the mixture is uniformly stirred and then coated to prepare a safety coating.

The positive active material layer used in the present application may be selected from various positive active material layers suitable for a lithium ion battery in the art, and the constitution and preparation thereof are well known in the art. The positive active material layer contains a positive active material, and various positive electrode active materials for preparing a lithium ion secondary battery positive electrode known to those skilled in the art may be used. For example, the positive electrode active material is a lithium-containing composite metal oxide, for example one or more of LiCoO₂, LiNiO₂, LiMn₂O₄, LiFePO₄, lithium nickel cobalt manganese oxide (such as LiNi_{0.5}Co_{0.2}M_{0.3}O₂) and one or more of lithium nickel manganese oxide.

Those skilled in the art will appreciate that various definition or preferred ranges of the component selection, component content, and material physicochemical properties (particle size, specific surface area) in the various embodiments of the present application mentioned above can be combined arbitrarily. The combined embodiments are still within the scope of the application and are considered as part of the disclosure.

The negative electrode plate for use in conjunction with the positive electrode plate of the present application may be selected from various conventional negative electrode plates in the art, and the constitution and preparation thereof are well known in the art. For example, the negative electrode plate may comprises a negative electrode current collector and a negative active material layer disposed on the negative electrode current collector, and the negative active material layer may comprise a negative active material, a binder, a conductive material, and the like. The negative active material is, for example, a carbonaceous material such as graphite (artificial graphite or natural graphite), conductive carbon black, carbon fiber, or the like, a metal or a semimetal material such as Si, Sn, Ge, Bi, Sn, In, or an alloy thereof, and a lithium-containing nitride or a lithium-containing oxide, a lithium metal or a lithium aluminum alloy.

The present application also discloses an electrochemical device, comprising the positive electrode plate according to the present application. The electrochemical device may be a capacitor, a primary battery or a secondary battery, for example a lithium-ion capacitor, a lithium-ion battery or a sodium-ion battery. In addition to the use of the positive electrode plate as described above, the construction and preparation methods of these electrochemical devices are known per se. Due to the use of the positive electrode plate as described above, the electrochemical device can have improved safety especially during nail penetration and electrical performances such as cycle performance. Furthermore, the positive electrode plate according to this application can be easily processed, so that the manufacturing cost of the electrochemical device can be reduced by using the positive electrode plate according to the present application.

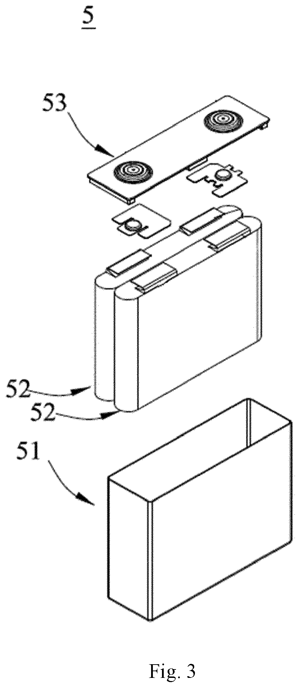

In a particular embodiment of the present application, the electrochemical device is a lithium ion battery. Fig. 2 is a perspective view of a lithium ion battery 5 according to an embodiment of the present application. Fig. 3 is an exploded view of Fig. 2. Referring to Fig. 2 and Fig. 3, the lithium ion battery 5 includes a case 51, an electrode assembly 52, a top cover assembly 53, and an electrolyte (not shown).

The electrode assembly 52 is packed in the case 51. The number of electrode assembly 52 is not limited and may be one or more. The electrode assembly 52 includes a positive electrode plate, a negative electrode plate, and a separator. The separator separates the positive electrode plate from the negative electrode plate. The electrolyte is injected into the case 51 and has soaked through the electrode assembly 52, the electrode assembly comprising, for example, a first electrode plate, a second electrode plate and a separator.

Please be noted that the lithium ion battery 5 shown in Fig. 1 is a can-type battery, but is not limited thereto, and the lithium ion battery 5 may be a pouch-type battery in which the case 51 is replaced by a metal plastic film and the top cover assembly 53 is removed.

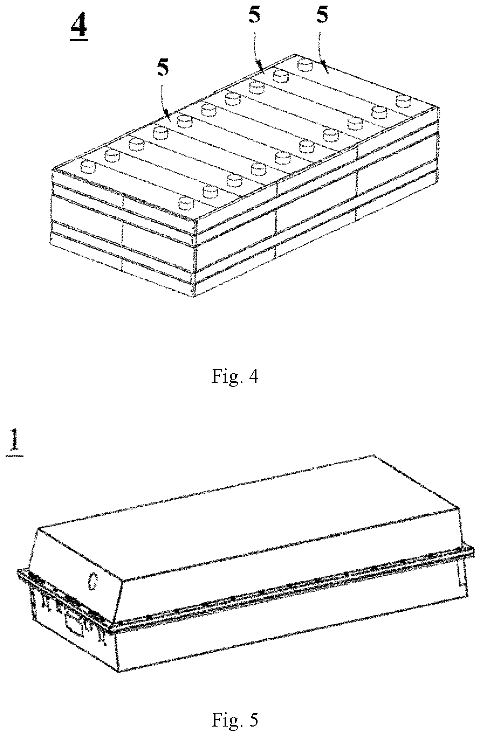

Next, a battery module according to another aspect of the present application will be described. Fig. 4 is a perspective view of a battery module 4 according to an embodiment of the present application.

The battery module 4 according to an embodiment of the present application comprises the lithium-ion battery 5 according to the present application.

Referring to Fig. 4, the battery module 4 includes a plurality of batteries 5. A plurality of lithium ion batteries 5 are arranged in the longitudinal direction. The battery module 4 can function as a power source or an energy storage device. The number of lithium ion battery 5 contained the battery module 4 can be adjusted according to the application and capacity of the battery module 4.

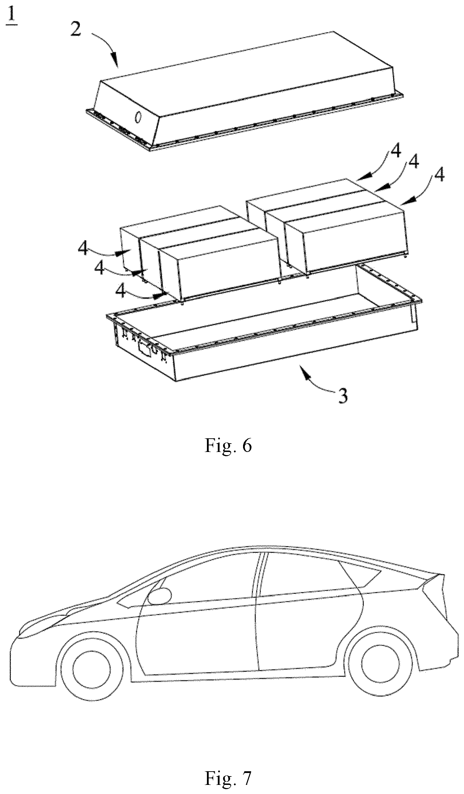

Next, a battery pack according to a still another aspect of the present application will be described. Fig. 5 is a perspective view of a battery pack 1 according to an embodiment of the present application. Fig. 6 is an exploded view of Fig. 5.

The battery pack 1 according to the present application comprises the battery module 4 according to an embodiment of the present application.

Specifically, referring to Fig. 5 and Fig.6, the battery pack 1 includes an upper cabinet body 2, a lower cabinet body 3, and a battery module 4. The upper cabinet body 2 and the lower cabinet body 3 are assembled together to form a space in which the battery module 4 is packed. The battery module 4 is placed in the space formed by assembling the upper cabinet body 2 and the lower cabinet body 3 together. The battery module 4 comprises an output passing through one or both of the upper cabinet body 2 and the lower cabinet body 3 to supply power to the outside or to be charged from the outside. The number and arrangement of the battery modules 4 contained in the battery pack 1 can be determined according to actual needs.

Next, a device according to still another aspect of the present application will be described.

Fig. 7 is a schematic view showing a device with a lithium ion battery as a power source according to an embodiment of the present application.

The device according to the present application comprises the lithium ion battery 5 according to an embodiment of the present application, and the lithium ion battery 5 can be used as a power source of the device. In Fig. 7, the device with the lithium ion battery 5 is an electric car. Of course, without limited thereto the device with the lithium ion battery 5 may be any other electric vehicles such as, an electric bus, an electric tram, an electric bicycle, an electric motorcycle, an electric scooter, an electric golf cart, an electric truck, electric ships, electric tools, electronic equipment and energy storage systems. The electric vehicle can be a pure electric vehicle, a hybrid electric vehicle, or a plug-in hybrid electric vehicle. Of course, according to the actual form of use, the device according to the present application may comprises the battery module 4 as described in the present application. Of course, the device according to the present application may also comprises the battery pack 1 as described in the present application.

### Examples

In order to make the objects, the technical solutions and the beneficial technical effects of the present application more clear, the present application will be described in further detail below with reference to the embodiments. However, it is to be understood that embodiments of the present application are only intended to be illustrative of the present application, and are not intended to limit the invention, and embodiments of the present application are not limited to those embodiments given in the specification. The experimental conditions not indicated in the examples may refer to conventional conditions, or the conditions recommended by the material supplier or equipment supplier.

### 1. Preparation method

### 1.1 Preparation of positive electrode plate

### 1) Safety coating

Depending on whether or not the polymer matrix material in the safety coating is subjected to crosslinking treatment, the safety coating was prepared by one of the following two methods.

For the polymer matrix without cross-linking treatment:
A certain ratio of a polymer matrix material, a conductive material, and an inorganic filler were mixed with N-methyl-2-pyrrolidone (NMP) as a solvent with stirring uniformly, which was then coated on both sides of metal current collector, followed by drying at 85°C to obtain a PTC layer, i.e. a safety coating.

For the polymer matrix with cross-linking treatment:
A certain ratio of a polymer matrix material, a conductive material, and an inorganic filler were mixed with N-methyl-2-pyrrolidone (NMP) as a solvent with stirring uniformly and then an activator (sodium silicate) and a crosslinking agent were added with stirring uniformly. The resulting mixture was then coated on both sides of metal current collector, followed by drying at 85°C to obtain a safety coating.

### 2) Positive Active Material Layer

Then, 90 wt% of a positive active material, 5wt% of SP, and 5 wt% of PVDF were mixed with NMP as a solvent with stirring uniformly, which was then coated on the safety coating of the current collector as prepared according to the above method followed by drying at 85°Cto obtain a positive active material layer.

### 3) Work up

Then, the current collector with two layers of positive active material was cold-pressed, then trimmed, cut, and stripped, followed by drying under vacuum at 85°C for 4 hours. After welding, the positive electrode plate meeting the requirements of the secondary battery was obtained.

The main materials used in the specific examples were as follows:
Binder: PVDF (Manufacturer "Solvay", model 5130), PVDC;
Crosslinking agent: acrylonitrile, tetraisocyanate, polyethylene glycol;
Conductive material (conductive agent): Super-P (TIMCAL, Switzerland, abbreviated as SP);
Current collector: aluminum in the form of foil with a thickness of 12µm. The current collector has an elongation at break of 3%.
Inorganic filler: alumina, lithium iron phosphate (abbreviated as LFP), carbon coating modified lithium iron phosphate (abbreviated as LFP/C), carbon coating modified lithium titanate (abbreviated as Li₄Ti₅O₁₂/C);
Positive active material: NCM811 (LiNi_{0.8}Co_{0.1}Mn_{0.1}O₂).

The above materials were commonly used materials in the lithium battery industry which may be commercially available from the corresponding suppliers.

### 1.2 Preparation of negative electrode plate

Negative electrode plate was prepared as follows: active material graphite, conductive agent Super-P, thickener CMC, binder SBR were added to deionized water as a solvent at a mass ratio of 96.5:1.0:1.0:1.5 to form an anode slurry; then the slurry was coated on the surface of the negative electrode metal current collector in the form of copper foil, and dried at 85°C, then trimmed, cut, and stripped, followed by drying under vacuum at 110°C for 4 hours. After welding, the negative electrode plate meeting the requirements of the secondary battery was obtained.

### 1.3 Preparation of electrolyte

Ethylene carbonate (ethylene carbonate, EC), ethyl methyl carbonate (ethyl methyl carbonate, EMC), and diethyl carbonate (diethyl carbonate, DEC) were mixed at a volume ratio of 3:5:2 to obtain a mixed solvent of EC/EMC/DEC, followed by dissolving the fully dried lithium salt LiPF₆ into the mixed organic solvent at a concentration of 1 mol/L to prepare an electrolyte.

### 1.4 Preparation of the battery

A polypropylene film with a thickness of 12 µm was used as a separator, and the positive electrode plate, the separator and the negative electrode plate were stacked in order, so that the separator was sandwiched in between the positive electrode plate and the negative electrode plate, and then the stack was wound into a bare battery core. After vacuum baking at 75°C for 10 h, the electrolyte (prepared as described in "Preparation of electrolyte" above) was injected therein followed by vacuum package and standing for 24 h. After that, the battery core was charged to 4.2 V with a constant current of 0.1 C, and then was charged with a constant voltage of 4.2 V until the current dropped to 0.05C, and then was discharged to 3.0V with a constant current of 0.1C. Above charging and discharging processes were repeated twice. Finally, the battery core was charged to 3.8V with a constant current of 0.1C, thereby completing the preparation of the secondary battery.

### 2. Tests for material performances

In each of the examples and comparative examples, the physical property parameters of the materials were measured by the common method in the art, unless otherwise specified.

Some specific parameters were tested using the following methods.

### 2.1 Particle size

The power sample was dispersed in a dispersing medium (distilled water), which was measured with a Malvern laser particle size analyzer MS2000 for 5 times and averaged in unit of µm.

### 2.2 BET specific surface area

The specific surface area of the powder sample of the test material was measured with a Quadrasorb SI specific surface tester for 5 times and averaged in unit of m²/g.

### 2.3 Binding force between film layer and current collector

The electrode plate containing a film layeron both sides of the current collector was cut into a sample to be tested having a width of 2 cm and a length of 15 cm. One side of the sample to be tested was uniformly adhered to a stainless steel plate at 25°C under normal pressure by using 3M double-sided tape. One end of the sample to be tested was fixed on a GOTECH tensile machine, and the film layer of the sample to be tested was stripped from the current collector by using the GOTECH tensile machine, wherein the maximum tensile force was read according to the data diagram of the tensile force and the displacement. The resulting value (in unit N) was divided by the width of the sample i.e. 0.02m to calculate the binding force (N/m).

### 2.4 Elongation at break of current collector

Two samples having a length of 200 mm and a width of 15 mm were taken from the current collector, which thickness was measured by micrometer in µm. The sample was then mounted on a tensile machine (model AI7000) and stretched at 50 mm/min. The two test results were averaged. Record the initial length L0, and start the tensile machine, until the sample broke, and read the displacement L1 of the sample at break from the tensile machine. Elongation at break = (L1-L0)/L0 ^{∗} 100%.

### 2.5 Thickness of current collector, thickness of coating and thickness of film layer

Thickness of the current collector was measured by a micrometer at 5 points and averaged.

Thickness of the coating and thickness of the film layer: first measure the thickness of the current collector, and then measure the total thickness of the current collector with the coating. The difference between the two values was used as the thickness of the coating. A similar method was used for the thickness of film layer.

### 2.6 Cracking of coating

After drying and obtaining a positive active material layer, if no cracks were observed in the 100 m²electrode plate, it was defined as no cracking; if the number of occurrences of cracks in 100m²electrode plate was ≤3, it was defined as mild cracking; if the number of occurrences of cracks in 100m²electrode plate was >3, it was defined as severe cracking.

### 2.7Elongation of film layer

Removal of the current collector from the electrode plate: take the positive electrode plate out of the battery core and add the electrolyte, so that the electrode plate was completely soaked in the electrolyte, which was stored at 90 ° C for more than 48h, and then taken out. After that, the film layer of the positive electrode plate can be peeled off from the current collector.

The resulting film layer was used to prepare a sample having a width of 20 mm and a length of 50 mm which thickness was measured by micrometer in µm. The sample was then mounted on a tensile machine (model AI7000) and stretched at 50 mm/min. Start the tensile test until the sample breaks. The initial length L0 was recorded. The displacement L1 of the sample at break was read from the tensile machine. The elongation = (L1-L0)/L0 ^{∗} 100%.

### 3. Test for battery performance

The safety performances of the secondary batteries from various examples and comparative examples were evaluated using GBT31485-2015 "Safety Requirements and Test Methods for Traction Battery of Electric Vehicle", and the test results were recorded.

### 3.1 Puncture test:

The secondary battery was fully charged to the charging cut-off voltage with a current of 1 C, and then charged with a constant voltage until the current dropped to 0.05 C. After that, charging was terminated. A high temperature resistant steel needle of ϕ5-10mm (the tip thereof had a cone angle of 45°) was used to puncture the battery plate at a speed of 25mm/sin the direction perpendicular to the battery plate. The puncture position should be close to the geometric center of the surface to be punctured, the steel needle stayedin the battery, and then observe if the battery had an indication of burning or exploding.

### 3.2 Overcharge test:

The secondary battery was fully charged to the charging cut-off voltage with a current of 1 C, and then charged with a constant voltage until the current dropped to 0.05 C. After that, charging was terminated. Then, after charging with a constant current of 1 C to reach 1.5 times the charging cut-off voltage or after charging with a constant current of 1 C for 1 hour, the charging was terminated.

### 3.3 Cycle performance test:

The test conditions for the cycle performance test were as follows: the secondary battery was subjected to a 1C/1C cycle test at 25°C in which the charging and discharging voltage range was 2.8 to 4.2 V. The test was terminated when the capacity was attenuated to 80% of the first discharging specific capacity.

### 3.4 PTC effect test

The secondary battery was fully charged to the charging cut-off voltage with a current of 1 C, and then charged with a constant voltage until the current was reduced to 0.05 C. After that, the charging was terminated and the DC resistance of the battery core was tested (discharging with a current of 4 C for 10 s). Then, the battery core was placed at 130°C for 1 h followed by testing the DC resistance, and calculating the DC resistance growth rate. Then, the battery core was placed at 130°C for 2 h followed by testing the DC resistance, and calculating the DC resistance growth rate.

### 3.5 DCR test

The secondary battery was adjusted to 50% SOC with a current of 1 C at 25°C, and the voltage U1 was recorded. Then, it was discharged with a current of 4 C for 30 seconds, and the voltage U2 was recorded. DCR = (U1-U2)/4C.

In the present application, for convenience of comparison, the DCR of the battery core in which the polymer material only containing uncrosslinked PVDF was used as a control, and was recorded as 100%, and the DCR of the other battery cores and the ratio thereof were calculated and recorded.

### 4. Performance test results

### 4.1Protection Performance (PTC effect) of safety coating and effect thereof on battery performance

In order to confirm the protection performance of safety coating, the corresponding safety coating, positive electrode plate, negative electrode plate and battery were prepared with the specific materials and amounts listed in Table 1-1 below according to the methods and procedures described in "1. Preparation method", and were tested according to the method specified in "3. Tests for battery performance".

In order to ensure accuracy of data, 4 samples were prepared for each battery (10 samples for the puncture test) and tested independently. The final test results were averaged and shown in Table 1-2.

In the test, the conventional electrode plate CPlateP was prepared with the method described in" 1.1 Preparation of positive electrode plate", but no safety coating was provided. That is to say, a positive active material was directly applied over the current collector. The conventional electrode plate Cplate N was prepared according to the method described in "1.2 Preparation of negative electrode plate".

**Table1-1: Compositions of electrode plate**

| | Current collector | positive active material | Composition of the safety coating | | | | | | |
|---|---|---|---|---|---|---|---|---|---|
| | | | polymer material | | conductive material | | Inorganic filler | | Thickness of safety coating H (µm) |
| | | | material | wt% | material | wt% | material | wt% | |
| CPlate P | Al foil | NCM811 | / | / | / | / | / | / | / |
| Comp. Plate CP | Al foil | NCM811 | Uncrosslinked PVDF | 90 | SP | 10 | / | / | 20 |
| Plate 1 | Al foil | NCM811 | Uncrosslinked PVDC | 35 | SP | 10 | alumina | 55 | 10 |
| Plate 2 | Al foil | NCM811 | Uncrosslinked PVDF | 35 | SP | 10 | LFP | 55 | 3 |

**Table 1-2: Performances of lithium-ion batteries**

| Battery No. | Positive electrode plate | Negative electrode plate | Puncture Test |
|---|---|---|---|
| Battery 1 | CPlate P | CPlate N | 0 pass, 1 0 no pass |
| Battery 2 | Comp. Plate CP | CPlate N | 2 pass, 8 no pass |
| Battery 3 | Plate 1 | CPlate N | 10 pass |
| Battery 4 | Plate 2 | CPlate N | 10 pass |

**Table 1-3: Performances of lithium-ion batteries**

| Battery No. | Positive electrode plate | Negative electrode plate | Growth of DCR (130°C, 1h) | Growth of DCR (130°C, 2h) |
|---|---|---|---|---|
| Battery 2 | Comp. Plate CP | CPlate N | 20% | 30% |
| Battery 4 | Plate 2 | CPlate N | 1200% | 1500% |

The data in Table 1-1 and Table 1-2 indicated that the safety coating with PVDF or PVDC as a polymer matrix significantly improved the safety performance of the battery during nail penetration, especially in the case that an inorganic filler was added. The growth of DCR data in Table 1-3 indicated that the safety coating composed of PVDF and a conductive material did have a PTC effect, and the addition of the inorganic filler significantly improved the DCR growth of the battery at a high temperature, that is, the PTC effect was more remarkable.

### 4.2 Effect of the content of each component contained in the safety coating

In order to further study the effect of the content of each component contained in the safety coating, the corresponding safety coating, positive electrode plate, negative electrode plate and battery were prepared with the specific materials and amounts listed in Table 3-1 below according to the methods and procedures described in "1. Preparation method", and then were tested according to the method specified in "3. Test for battery performance". In order to ensure the accuracy of data, 4 samples were prepared for each battery (10 samples for the puncture test or overcharge test) and tested independently. The final test results were averaged and shown in Table 3-2.

**Table 2-1: Compositions of electrode plate**

| | Current collector | positive active material | Composition of the safety coating | | | | | | |
|---|---|---|---|---|---|---|---|---|---|
| | | | polymer matrix | | conductive material | | Inorganic filler | | Thickness of safety coating H (µm) |
| | | | material | wt% | material | wt% | material | wt% | |
| Comp. Plate2-1 | Al foil | NCM811 | Uncrosslinked PVDF | 75 | SP | 20 | alumina | 5 | 8 |
| Plate2-2 | Al foil | NCM811 | Uncrosslinked PVDF | 75 | SP | 15 | alumina | 10 | 8 |
| Plate2-3 | Al foil | NCM811 | Uncrosslinked PVDF | 75 | SP | 10 | alumina | 15 | 8 |
| Plate2-4 | Al foil | NCM811 | Uncrosslinked PVDF | 60 | SP | 10 | alumina | 30 | 8 |
| Plate2-5 | Al foil | NCM811 | Uncrosslinked PVDF | 60 | SP | 8 | alumina | 32 | 8 |
| Plate2-6 | Al foil | NCM811 | Uncrosslinked PVDF | 55 | SP | 15 | alumina | 30 | 8 |
| Plate2-7 | Al foil | NCM811 | Uncrosslinked PVDF | 50 | SP | 25 | alumina | 25 | 8 |
| Plate2-8 | Al foil | NCM811 | Uncrosslinked PVDF | 40 | SP | 15 | alumina | 45 | 8 |
| Plate2-9 | Al foil | NCM811 | Uncrosslinked PVDF | 35 | SP | 5 | alumina | 60 | 8 |
| Comp. Plate2-10 | Al foil | NCM811 | Uncrosslinked PVDF | 25 | SP | 5 | alumina | 70 | 8 |

**Table2-2: Performance of lithium-ion batteries**

| Battery | Positive electrode | Negative electrode | Puncture Test | Cycle Life (cycle) |
|---|---|---|---|---|
| Battery 6 | Comp. Plate 2-1 | CPlate N | 5 pass, 5 no pass | 2502 |
| Battery 7 | Plate 2-2 | Cplate N | 10 pass | 2351 |
| Battery 8 | Plate 2-3 | Cplate N | 10 pass | 2205 |
| Battery 9 | Plate 2-4 | Cplate N | 10 pass | 2251 |
| Battery 10 | Plate 2-5 | Cplate N | 10 pass | 2000 |
| Battery 11 | Plate 2-6 | Cplate N | 10 pass | 2408 |
| Battery 12 | Plate 2-7 | Cplate N | 10 pass | 2707 |
| Battery 13 | Plate 2-8 | Cplate N | 10 pass | 2355 |
| Battery 14 | Plate 2-9 | Cplate N | 10 pass | 1800 |
| Battery 15 | Comp. Plate 2-10 | Cplate N | 4 pass, 6 no pass | 1715 |

The data in Table 2-1 and Table 2-2 show that: (1) If the content of the inorganic filler is too low, the stability of the safety coating is not high, so safety performance of the battery cannot be fully improved; if the content of the inorganic filler is too high, the content of the polymer matrix is too low, so that the safety coating cannot exert its effect; (2) the conductive material has a great influence on the internal resistance and polarization of the battery, so it would affect the cycle life of the battery. The higher the content of the conductive material, the smaller the internal resistance and polarization of the battery is so that the cycle life will be better.

It had been found through experiments that the appropriate content range of each component in the safety coating is as follows:
the weight percentage of the polymer matrix is 35 wt% to 75 wt%;
the weight percentage of the conductive material is 5 wt% to 25 wt%; and
the weight percentage of the inorganic filler is from 10wt% to 60wt%.

As long as the content of each component in the safety coating is within the above range, the effect of improving the safety and electrical performance (e.g., cycle performance) of the battery can be achieved.

### 4.3 Effect of the kind of the inorganic filler on battery performance

In order to further study the effect of materials in the safety coating on performances of the electrode plate and the battery, the corresponding safety coating, positive electrode plate, negative electrode plate and battery were prepared with the specific materials and amounts listed in Table 3-1 below according to the methods and procedures described in "1. Preparation method", and were tested according to the method specified in "3. Test for battery performance". In order to ensure accuracy of data, 4 samples were prepared for each battery (10 samples for the puncture test or overcharge test) and tested independently. The final test results were averaged which were shown in Table 3-2.

**Table 3-1: Compositions of electrode plate**

| | Current collector | Positive active material | Composition of the safety coating | | | | | | | |
|---|---|---|---|---|---|---|---|---|---|---|
| | | | polymer matrix | | conductive material | | Inorganic filler | | | Thickness of safety coating H (µm) |
| | | | material | wt% | material | wt% | material | wt% | Carbon Content | |
| Plate2-41 | Al foil | NCM811 | Uncrosslinked PVDF | 60 | SP | 10 | alumina | 30 | / | 8 |
| Plate2-42 | Al foil | NCM811 | Uncrosslinked PVDF | 60 | SP | 10 | LFP | 30 | / | 8 |
| Plate2-43 | Al foil | NCM811 | Uncrosslinked PVDF | 60 | SP | 10 | LFP/C | 30 | 1 | 8 |
| Plate2-44 | Al foil | NCM811 | Uncrosslinked PVDF | 60 | SP | 10 | LFP/C | 30 | 2 | 8 |
| Plate2-45 | Al foil | NCM811 | Uncrosslinked PVDF | 60 | SP | 10 | LFP/C | 30 | 3 | 8 |
| Plate2-46 | Al foil | NCM811 | Uncrosslinked PVDF | 60 | SP | 10 | Li₄Ti₅O₁₂/C | 30 | 5 | 8 |

**Table 3-2: Performances of lithium-ion batteries**

| Battery | Positive electrode | Negative electrode | Puncture Test | Overcharge Test | Cycle test (cycle) |
|---|---|---|---|---|---|
| Battery 46 | Plate2-41 | CPlate N | 10 pass | 0 pass, 10 no pass | 2200 |
| Battery 47 | Plate2-42 | CPlate N | 10 pass | 10 pass | 2300 |
| Battery 48 | Plate2-43 | CPlate N | 10 pass | 10 pass | 2500 |
| Battery 49 | Plate2-44 | CPlate N | 10 pass | 10 pass | 2700 |
| Battery 50 | Plate2-45 | CPlate N | 10 pass | 10 pass | 2900 |
| Battery 51 | Plate2-46 | CPlate N | 10 pass | 10 pass | 3000 |

The data in Tables 3-1 and 3-2 showed that compared to other materials (such as alumina), the electrochemically active material further significantly improved the overcharge safety performance of the battery. In addition, carbon coating modified electrochemically active material still further improved the cycle life of the battery.

### 4.4 Effect of crosslinking on battery performance

The corresponding safety coating, positive electrode plate, negative electrode plate and battery were prepared with the specific materials and amounts listed in Table 4-1 below according to the methods and procedures described above, and were tested according to the specified method to study the effect of the crosslinking on coating cracking and DCR, the results were shown in Table 4-2.

**Table 4-1: Effect of crosslinking agent**

| | Current collector | positive active material | Composition of the safety coating | | | | | | | | | Cracking (coating speed 50m/min) |
|---|---|---|---|---|---|---|---|---|---|---|---|---|
| | | | polymer matrix | | conductive material | | Inorganic filler | | Crosslinking agent | | Thickness of the underlying layer H (µm) | |
| | | | material | wt% | material | wt% | material | wt% | type | Ratio to the polymer material | | |
| Plate 2-51 | Al foil | NCM811 | Uncrosslinked PVDF | 60 | SP | 10 | LFP/C | 30 | No | 0 | 8 | Severe cracking |
| Plate 2-52 | Al foil | NCM811 | Crosslinked PVDF | 60 | SP | 10 | LFP/C | 30 | Acrylonitrile | 0.01% | 8 | Mild cracking |
| Plate 2-53 | Al foil | NCM811 | Crosslinked PVDF | 60 | SP | 10 | LFP/C | 30 | Tetraisocyanate | 0.1% | 8 | No cracking |
| Plate 2-54 | Al foil | NCM811 | Crosslinked PVDF | 60 | SP | 10 | LFP/C | 30 | Polyethylene glycol | 0.5% | 8 | No cracking |
| Plate 2-55 | Al foil | NCM811 | Crosslinked PVDF | 60 | SP | 10 | LFP/C | 30 | Acrylonitrile | 1.5% | 8 | No cracking |
| Plate 2-56 | Al foil | NCM811 | Crosslinked PVDF | 60 | SP | 10 | LFP/C | 30 | Acrylonitrile | 5% | 8 | No cracking |
| Plate 2-57 | Al foil | NCM811 | Uncrosslinked PVDC | 60 | SP | 10 | LFP/C | 30 | No | No | 8 | Severe cracking |
| Plate 2-58 | Al foil | NCM811 | Crosslinked PVDC | 60 | SP | 10 | LFP/C | 30 | Acrylonitrile | 3% | 8 | No cracking |

In the case where the coating speed of the positive active material layer was 50 m/min, the polymer matrix of the electrode plate 2-51 was not crosslinked by adding a crosslinking agent, and thus there was a severe cracking on the electrode plate. The addition of a crosslinking agent had a significant effect on improving the cracking of the electrode plate. No cracking occurred in the electrode plate 2-53 to the electrode plate 2-56. Similar experiments were performed for PVDC (electrode plates 2-57 and 2-58) and the results were similar. It can be seen that the addition of the crosslinking agent significantly eliminated the coating cracking of the electrode plate.

**Table 4-2: Performance of lithium-ion battery**

| Battery | Positive electrode | Negative electrode | DCR of the battery | Puncture Test |
|---|---|---|---|---|
| Battery 52 | Plate 2-51 | CPlate N | 100% | 10 pass |
| Battery 53 | Plate 2-52 | CPlate N | 80% | 10 pass |
| Battery 54 | Plate 2-53 | CPlate N | 85% | 10 pass |
| Battery 55 | Plate 2-54 | CPlate N | 78% | 10 pass |
| Battery 56 | Plate 2-55 | CPlate N | 75% | 10 pass |
| Battery 57 | Plate 2-56 | CPlate N | 84% | 10 pass |

For the electrode plate 2-51, the polymer matrix was not crosslinked by adding a crosslinking agent, and thus the polymer matrix was swelled greatly in the electrolyte, resulting in a large DCR. The addition of the crosslinking agent reduced the swelling of the polymer matrix in the electrolyte, and had a significant effect on reducing DCR. From above results, it was confirmed that the addition of the crosslinking agent significantly reduced the DCR of the battery.

In addition, the above data indicated that PVDF/PVDC can be used as the polymer matrix of PTC layer regardless of crosslinking, and the obtained battery had high safety performance in which the test result of puncture test is excellent, which indicated that the crosslinking treatment did not adversely affect the protective effect of the safety coating. Furthermore, compared with the uncrosslinked PVDC/PVDF, the crosslinking treatment improved the cracking of the electrode plate, from severe cracking to no cracking or mild cracking. The crosslinking treatment can reduce the swelling of the polymer matrix in the electrolyte, thereby reducing the DCR by 15% to 25%, thereby improving the electrical properties of the battery.

### 4.5 Effect of metal current collector on battery performance

In order to study the effect of metal current collector on battery performance, the corresponding safety coating, positive electrode plate, negative electrode plate and battery having current collectors with different materials were prepared with the specific materials and amounts listed in Table 5-1 below according to the methods and procedures described above, and were tested. Except that the elongation at break of the current collectors (all are aluminum foil) is different, electrode plates (2-11, 2-12, 2-13, 2-14, 2-15) each has the same structure and material as the electrode plate 2-45, that is, they each has the same safety coating as the electrode plate 2-45.

In order to ensure accuracy of data, 4 samples were prepared for each battery (10 samples for the puncture test) and tested independently. The final test results were averaged which were shown in Table 5-2.

**Table 5-1: Compositions of electrode plate**

| | electrode | Elongation at break of current collector | Positive active material |
|---|---|---|---|
| Plate2-11 | Positive | 2% | NCM811 |
| Plate2-12 | Positive | 0.5% | NCM811 |
| Plate2-13 | Positive | 0.8% | NCM811 |
| Plate2-14 | Positive | 4% | NCM811 |
| Plate2-15 | Positive | 5% | NCM811 |

**Table 5-2: Performance of lithium-ion battery**

| Battery | Positive electrode | Negative electrode | Puncture Test |
|---|---|---|---|
| Battery61 | Plate 2-11 | CPlate N | 10 pass |
| Battery62 | Plate 2-12 | CPlate N | severely broken not to be made into cell |
| Battery63 | Plate 2-13 | CPlate N | 10 pass |
| Battery64 | Plate 2-14 | CPlate N | 9 pass, 1 no pass |
| Battery65 | Plate 2-15 | CPlate N | 7 pass, 3 no pass |

The data in Tables 5-1 and 5-2 showed that elongation at break of the metal current collector will produce an influence on performance and safety performance of the electrode plate and battery. When a metal current collector having an elongation at break δ≤4% is used, the safety coating of the present positive electrode plate is sufficient to suppress the occurrence of a short circuit in batteries caused by abnormal conditions such as nail penetration, and thus allows the battery to pass the nail penetration test. When a metal current collector having an elongation at break δ>4% is used, the battery fails the nail penetration test. In addition, when a metal current collector having an elongation at break δ <0.8% is used, during processing such as plate compaction or battery charging and discharging, a band breakage phenomenon may occur, resulting in a low rate of superiority and inability to prepare a battery cell. Therefore, from the perspective of safety and stability performance, the elongation at break δ of the current collector further satisfies: 0.8% ≦ δ ≦ 2%

It will be understood by those skilled in the art that the above application examples of the positive electrode plate of the present application are only exemplified to be used for a lithium battery, but the positive electrode plate of the present application can also be applied to other types of batteries or electrochemical devices, and still may produce good technical effect of the present application.

It will be apparent to those skilled in the art that the present application may be modified and varied in accordance with the above teachings. Accordingly, the present application is not limited to the specific embodiments disclosed and described above, and modifications and variations of the present application are intended to be included within the scope of the claims of the present application. In addition, although some specific terminology is used in this specification, these terms are for convenience of illustration only and are not intended to limit the present application in any way.

## Claims

1. A positive electrode plate **characterized in** comprising a metal current collector (10), a positive active material layer (14) and a safety coating (12) disposed between the metal current collector (10) and the positive active material layer (14), the safety coating (12) comprising a polymer matrix, a conductive material and an inorganic filler,
wherein the polymer matrix is a fluorinated polyolefin and/or chlorinated polyolefin polymer matrix,
wherein based on the total weight of the safety coating, the polymer matrix is present in a weight percentage of 35-75% by weight, the conductive material is present in a weight percentage of 5-25% by weight and the inorganic filler is present in a weight percentage of 10-60% by weight, and
wherein the metal current collector (10) has an elongation at break δ fulfilling 0.8%≤ δ ≤2%, as measured according to the description,
wherein the polymer matrix of the safety coating is fluorinated polyolefin and/or chlorinated polyolefin having a crosslinked structure.

2. The positive electrode plate as claimed in claim 1, wherein the polymer matrix is selected from at least one of polyvinylidene fluoride, PVDF, carboxylic acid modified PVDF, acrylic acid modified PVDF, polyvinylidene chloride, PVDC, carboxylic acid modified PVDC, acrylic acid modified PVDC, PVDF copolymer, PVDC copolymer.

3. The positive electrode plate as claimed in any one of claims 1 to 2, wherein the conductive material is selected from at least one of a conductive carbon-based material, a conductive metal material, and a conductive polymer material,
preferably, the conductive carbon-based material is selected from at least one of conductive carbon black, acetylene black, graphite, graphene, carbon nanotubes, carbon nanofibers;
preferably, the conductive metal material is selected from at least one of Al powder, Ni powder, and gold powder; and
preferably, the conductive polymer material is selected from at least one of conductive polythiophene, conductive polypyrrole, and conductive polyaniline.

4. The positive electrode plate as claimed in any one of claims 1 to 3, wherein the inorganic filler is selected from at least one of a metal oxide, a non-metal oxide, a metal carbide, a non-metal carbide, and an inorganic salt, or at least one of a conductive carbon coating modified above material, a conductive metal coating modified above material or a conductive polymer coating modified above material;
Preferably, the inorganic filler of the safety coating is at least one of magnesium oxide, aluminum oxide, titanium dioxide, zirconium oxide, silicon dioxide, silicon carbide, boron carbide, calcium carbonate, aluminum silicate, calcium silicate, potassium titanate, barium sulfate, lithium cobalt oxide, lithium nickel manganese cobalt oxide, lithium nickel manganese alumina, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel lithium manganese oxide, spinel lithium nickel manganese oxide, and lithium titanate, or a conductive carbon coating modified above material, a conductive metal coating modified above material, a conductive polymer coating modified above material;
preferably the inorganic filler has an average particle diameter D of 100 nm ≤ D ≤ 10 µm, and
preferably the inorganic filler has a Brunner-Emmet-Teller, BET, specific surface area of not more than 500 m²/g.

5. The positive electrode plate as claimed in any one of claims 1 to 4, wherein the polymer matrix is present in a weight percentage of 50wt% to 75 wt%, the conductive material is present in a weight percentage of 5 wt% to 20 wt% and the inorganic filler is present in a weight percentage of 15 wt% to 45 wt%.

6. The positive electrode plate as claimed in any one of claims 1 to 5, wherein the metal current collector has a thickness of 4µm to 16µm.

7. The positive electrode plate as claimed in any one of claims 1 to 6, wherein the positive active material layer and the safety coating together form a film layer and the film layer has an elongation at break, measured according to the respective method in the description, of 30% or more, preferably 80% or more; preferably, the film layer has a binding force of 10N/m or more with the metal current collector.

8. The positive electrode plate as claimed in claim 7, wherein the film layer has a single side thickness of 30µm to 80µm.

9. An electrochemical device comprising the positive electrode plate as claimed in any one of claims 1 to 8, which is a capacitor, a primary battery or a secondary battery, preferably a lithium ion battery.

10. A battery module comprising the battery as claimed in claim 9.

11. A battery pack comprising the battery module according to claim 10.

12. A device comprising the battery as claimed in claim 9, wherein the battery is used as a power source of the device; preferably, the device comprising electric vehicles, hybrid electric vehicles, plug-in hybrid electric vehicles, electric bicycles, electric scooters, electric golf carts, electric trucks, electric ships, or energy storage systems.

## Patentansprüche

1. Positive Elektrodenplatte, **dadurch gekennzeichnet, dass** sie einen Metallstromkollektor (10), eine positive Aktivmaterialschicht (14) und eine Sicherheitsbeschichtung (12) umfasst, die zwischen dem Metallstromkollektor (10) und der positiven Aktivmaterialschicht (14) angeordnet ist, wobei die Sicherheitsbeschichtung (12) eine Polymermatrix, ein leitendes Material und einen anorganischen Füllstoff umfasst,
wobei die Polymermatrix eine fluorierte Polyolefin- und/oder chlorierte Polyolefin-Polymermatrix ist,
wobei bezogen auf das Gesamtgewicht der Sicherheitsbeschichtung die Polymermatrix in einem Gewichtsprozentsatz von 35-75 Gew.-% vorhanden ist, das leitende Material in einem Gewichtsprozentsatz von 5-25 Gew.-% vorhanden ist, und der anorganische Füllstoff in einem Gewichtsprozentsatz von 10-60 Gew.-% vorhanden ist, und
wobei der Metallstromkollektor (10) eine Bruchdehnung δ hat, die 0,8 % ≤ δ ≤ 2 % erfüllt, gemessen gemäß der Beschreibung,
wobei die Polymermatrix der Sicherheitsbeschichtung fluoriertes Polyolefin und/oder chloriertes Polyolefin mit einer vernetzten Struktur ist.

2. Positive Elektrodenplatte nach Anspruch 1, wobei die Polymermatrix aus mindestens einem von Polyvinylidenfluorid, PVDF, Carbonsäure-modifiziertem PVDF, Acrylsäure-modifiziertem PVDF, Polyvinylidenchlorid, PVDC, Carbonsäure-modifiziertem PVDC, Acrylsäure-modifiziertem PVDC, PVDF-Copolymer, PVDC-Copolymer ausgewählt ist.

3. Positive Elektrodenplatte nach einem der Ansprüche 1 bis 2, wobei das leitende Material aus mindestens einem von einem leitenden Material auf Kohlenstoffbasis, einem leitenden Metallmaterial und einem leitenden Polymermaterial ausgewählt ist,
vorzugsweise das leitende Material auf Kohlenstoffbasis aus mindestens einem von leitendem Ruß, Acetylenruß, Graphit, Graphen, Kohlenstoffnanoröhren, Kohlenstoffnanofasern ausgewählt ist;
vorzugsweise das leitende Metallmaterial aus mindestens einem von Al-Pulver, Ni-Pulver und Goldpulver ausgewählt ist; und
vorzugsweise das leitende Polymermaterial aus mindestens einem von leitendem Polythiophen, leitendem Polypyrrol und leitendem Polyanilin ausgewählt ist.

4. Positive Elektrodenplatte nach einem der Ansprüche 1 bis 3, wobei der anorganische Füllstoff aus mindestens einem Metalloxid, einem Nichtmetalloxid, einem Metallcarbid, einem Nichtmetallcarbid und einem anorganischen Salz oder mindestens eines von einem mit einer leitfähigen Kohlenstoffbeschichtung modifizierten obigen Material, einem mit einer leitfähigen Metallbeschichtung modifizierten obigen Material oder einem mit einer leitfähigen Polymerbeschichtung modifizierten obigen Material ausgewählt ist;
vorzugsweise der anorganische Füllstoff der Sicherheitsbeschichtung mindestens einer von Magnesiumoxid, Aluminiumoxid, Titandioxid, Zirkoniumoxid, Siliziumdioxid, Siliziumkarbid, Borkarbid, Calciumcarbonat, Aluminiumsilikat, Calciumsilikat, Kaliumtitanat, Bariumsulfat, Lithiumkobaltoxid, Lithium-Nickel-Mangan-Kobaltoxid, Lithium-Nickel-Mangan-Aluminiumoxid, Lithiumeisenphosphat, Lithiumvanadiumphosphat, Lithiumkobaltphosphat, Lithiummanganphosphat, Lithiummanganeisenphosphat, Lithiumeisensilikat, Lithiumvanadiumsilikat, Lithiumkobaltsilikat, Lithiummangan Silikat, Spinell-Lithium-Manganoxid, Spinell-Lithium-Nickel-Manganoxid und Lithiumtitanat oder einem mit einer leitfähigen Kohlenstoffbeschichtung modifizierten obigen Material, einem mit einer leitfähigen Metallbeschichtung modifizierten obigen Material oder einem mit einer leitfähigen Polymerbeschichtung modifizierten obigen Material ist;
vorzugsweise der anorganische Füllstoff einen durchschnittlichen Teilchendurchmesser D von 100 nm ≤ D ≤ 10 µm aufweist, und
vorzugsweise der anorganische Füllstoff eine Brunner-Emmet-Teller, BET, spezifische Oberfläche von nicht mehr als 500 m²/g aufweist.

5. Positive Elektrodenplatte nach einem der Ansprüche 1 bis 4, wobei die Polymermatrix in einem Gewichtsprozentsatz von 50 Gew.-% bis 75 Gew.-% vorhanden ist, das leitende Material in einem Gewichtsprozentsatz von 5 Gew.-% bis 20 Gew.-% vorhanden ist. und der anorganische Füllstoff in einem Gewichtsprozentsatz von 15 Gew.-% bis 45 Gew.-% vorhanden ist.

6. Positive Elektrodenplatte nach einem der Ansprüche 1 bis 5, wobei der Metallstromkollektor eine Dicke von 4 µm bis 16 µm aufweist.

7. Positive Elektrodenplatte nach einem der Ansprüche 1 bis 6, wobei die positive Aktivmaterialschicht und die Sicherheitsbeschichtung zusammen eine Filmschicht bilden und die Filmschicht eine Bruchdehnung, gemessen gemäß dem jeweiligen Verfahren in der Beschreibung, von 30 % oder mehr, vorzugsweise 80 % oder mehr, aufweist; vorzugsweise die Filmschicht eine Bindungskraft von 10 Nm oder mehr mit dem Metallstromkollektor aufweist.

8. Positive Elektrodenplatte nach Anspruch 7, wobei die Filmschicht eine einseitige Dicke von 30 µm bis 80 µm aufweist.

9. Elektrochemische Vorrichtung, umfassend die positive Elektrodenplatte nach einem der Ansprüche 1 bis 8, die ein Kondensator, eine Primärbatterie oder eine Sekundärbatterie, vorzugsweise eine Lithium-lonen-Batterie, ist.

10. Batteriemodul, umfassend die Batterie nach Anspruch 9.

11. Batteriepack, umfassend das Batteriemodul nach Anspruch 10.

12. Vorrichtung, umfassend die Batterie nach Anspruch 9, wobei die Batterie als Energiequelle der Vorrichtung verwendet wird; vorzugsweise die Vorrichtung Elektrofahrzeuge, Hybridelektrofahrzeuge, Plug-in-Hybridelektrofahrzeuge, Elektrofahrräder, Elektroroller, Elektrogolfwagen, Elektrolastwagen, Elektroschiffe oder Energiespeichersysteme umfasst.

## Revendications

1. Plaque d'électrode positive, **caractérisée en ce qu'**elle comprend un collecteur de courant métallique (10), une couche de matériau actif positif (14) et un revêtement de sécurité (12) appliqué entre le collecteur de courant métallique (10) et la couche de matériau actif positif (14), le revêtement de sécurité (12) comprenant une matrice polymère, un matériau conducteur et une charge inorganique,
dans laquelle la matrice polymère est une polyoléfine fluorée et/ou une matrice polymère de polyoléfine chlorée,
dans laquelle, par rapport au poids total du revêtement de sécurité, le pourcentage en poids de la matrice polymère est de 35 à 75 % en poids, le pourcentage en poids du matériau conducteur est de 5 à 25 % et le pourcentage en poids de la charge inorganique est de 10 à 60 %, et
dans laquelle le collecteur de courant métallique (10) présente un allongement à la rupture δ satisfaisant à 0,8 % ≤ δ ≤ 2 % mesuré selon la description,
dans laquelle la matrice polymère du revêtement de sécurité est une polyoléfine fluorée et/ou une polyoléfine chlorée ayant une structure réticulée.

2. Plaque d'électrode positive selon la revendication 1, dans laquelle la matrice polymère est au moins un choisi parmi le fluorure de polyvinylidène (PVDF), le PVDF modifié par l'acide carboxylique, le PVDF modifié par l'acide acrylique, le chlorure de polyvinylidène (PVDC), le PVDC modifié par l'acide carboxylique, le PVDC modifié par l'acide acrylique, un copolymère PVDF et un copolymère PVDC.

3. Plaque d'électrode positive selon l'une quelconque des revendications 1 à 2, dans laquelle le matériau conducteur est au moins un choisi parmi un matériau conducteur à base de carbone, un matériau métallique conducteur et un matériau polymère conducteur,
de préférence, le matériau conducteur à base de carbone est au moins un choisi parmi le noir de charbon conducteur, le noir d'acétylène, le graphite, le graphène, les nanotubes de carbone et les nanofibres de carbone ;
de préférence, le matériau métallique conducteur est au moins un choisi parmi la poudre d'Al, la poudre de Ni et la poudre d'or ; et
de préférence, le matériau polymère conducteur est au moins un choisi parmi le polythiophène conducteur, le polypyrrole conducteur et la polyaniline conductrice.

4. Plaque d'électrode positive selon l'une quelconque des revendications 1 à 3, dans laquelle la charge inorganique est au moins un choisie parmi un oxyde métallique, un oxyde non métallique, un carbure métallique, un carbure non métallique et un sel inorganique, ou au moins un choisie parmi un matériau ci-dessus modifié par revêtement de carbone conducteur, un matériau ci-dessus modifié par revêtement métallique conducteur ou un matériau ci-dessus modifié par revêtement de polymère conducteur ;
de préférence, la charge inorganique dans le revêtement de sécurité est au moins un choisie parmi l'oxyde de magnésium, l'oxyde d'aluminium, le dioxyde de titane, l'oxyde de zirconium, le dioxyde de silicium, le carbure de silicium, le carbure de bore, le carbonate de calcium, le silicate d'aluminium, le silicate de calcium, le titanate de potassium, le sulfate de baryum, l'oxyde de lithium-cobalt, l'oxyde de lithium-nickel-manganèse-cobalt, l'aluminate de lithium-nickel-manganèse, le phosphate de lithium-fer, le phosphate de lithium-vanadium, le phosphate de lithium-cobalt, le phosphate de lithium-manganèse, le phosphate de lithium-manganèse-fer, le silicate de lithium-fer, le silicate de lithium-vanadium, le silicate de lithium-cobalt, le silicate de lithium-manganèse, l'oxyde de lithium-manganèse spinelle, l'oxyde de lithium-nickel-manganèse spinelle et le titanate de lithium, ou un matériau ci-dessus modifié par revêtement de carbone conducteur, un matériau ci-dessus modifié par revêtement métallique conducteur ou un matériau ci-dessus modifié par revêtement de polymère conducteur ;
de préférence, la charge inorganique présente une taille des particules moyenne D de 100 nm ≤ D ≤ 10 µm, et
de préférence, la charge inorganique a une surface spécifique Bruner-Emmett-Teller, BET, non supérieure à 500 m²/g.

5. Plaque d'électrode positive selon l'une quelconque des revendications 1 à 4, dans laquelle le pourcentage en poids de la matrice polymère est de 50 à 75 %, le pourcentage en poids du matériau conducteur est de 5 à 20 %, et le pourcentage en poids de la charge inorganique est de 15 à 45 %.

6. Plaque d'électrode positive selon l'une quelconque des revendications 1 à 5, dans laquelle le collecteur de courant métallique a une épaisseur comprise entre 4 µm à 16 µm.

7. Plaque d'électrode positive selon l'une quelconque des revendications 1 à 6, dans laquelle la couche de matériau actif positif et le revêtement de sécurité forment ensemble une couche de film, la couche de film présentant un allongement à la rupture mesuré selon la description, de 30 % ou plus, de préférence de 80 % ou plus ; de préférence, la couche de film présentant une force de liaison de 10 N/m ou plus au collecteur de courant métallique.

8. Plaque d'électrode positive selon la revendication 7, dans laquelle la couche de film a une épaisseur d'un seul côté de 30 à 80 µm.

9. Dispositif électrochimique, comprenant la plaque d'électrode positive selon l'une quelconque des revendications 1 à 8, qui est un condensateur, une batterie primaire ou une batterie secondaire, de préférence une batterie au lithium-ion.

10. Module de batterie, comprenant la batterie selon la revendication 9.

11. Bloc de batteries, comprenant le module de batterie selon la revendication 10.

12. Appareil comprenant la batterie selon la revendication 9, dans lequel la batterie est utilisée comme source de puissance du l'appareil ; de préférence, l'appareil comprenant des véhicules électriques, des véhicules électriques hybrides, des véhicules électriques hybrides rechargeables, des vélos électriques, des scooters électriques, des voiturettes de golf électrique, des camions électriques, des bateaux électriques ou des systèmes de stockage d'énergie.
